**Europäisches Patentamt**

**European Patent Office**

**Office européen des brevets**

(19)

(11) Veröffentlichungsnummer: **0 003 111**
**B1**

(12)

# EUROPÄISCHE PATENTSCHRIFT

(45) Veröffentlichungstag der Patentschrift:
02.06.82

(21) Anmeldenummer: **79100027.6**

(22) Anmeldetag: **05.01.79**

(51) Int. Cl.³: **B 65 G 47/64**, B 07 C 5/36

(54) Vorrichtung zum seitlichen Ablenken von ausgewählten Gegenständen von einer ersten, durch ein Transportband gebildeten Transporteinrichtung auf eine zweite Transporteinrichtung.

(30) Priorität: **13.01.78 DE 2801387**

(43) Veröffentlichungstag der Anmeldung:
**25.07.79 Patentblatt 79/15**

(45) Bekanntmachung des Hinweises auf die Patenterteilung:
**02.06.82 Patentblatt 82/22**

(84) Benannte Vertragsstaaten:
**BE CH DE FR GB IT LU NL SE**

(56) Entgegenhaltungen:
**DE-A-1 548 285**
**DE-A-2 358 185**
**DE-A-2 403 404**
**DE-A-2 437 798**
**DE-A-2 555 192**
**FR-A-2 087 171**
**US-A-3 361 247**
**US-A-3 512 638**
**FÖRDERN UND HEBEN, Band 21, Nr. 5, 1971**
**J. J. SALZER »Verzweigungen in horizontalen**
**Förderstrecken« Seiten 232 bis 236**

(73) Patentinhaber: **Heuft, Bernhard, Im Sonnenwinkel 14,**
**D-5475 Burgbrohl (DE)**

(72) Erfinder: **Heuft, Bernhard, Im Sonnenwinkel 14,**
**D-5475 Burgbrohl (DE)**

(74) Vertreter: **Abitz, Walter, Dr.-Ing. et al, Abitz, Morf,**
**Gritschneder P.O. Box 86 01 09, D-8000 München 86 (DE)**

# Vorrichtung zum seitlichen Ablenken von ausgewählten Gegenständen von einer ersten, durch ein Transportband gebildeten Transporteinrichtung auf eine zweite Transporteinrichtung

Die Erfindung betrifft eine Vorrichtung zum seitlichen Ablenken von bestimmten, nach einem Merkmal ausgewählten Gegenständen von einer ersten, durch ein Transportband gebildeten Transporteinrichtung auf eine zweite Transporteinrichtung der abgelenkten Gegenstände. Derartige Vorrichtungen sind zum Beispiel in Anlagen enthalten, die Flüssigkeiten in Behälter, wie Flaschen, abfüllen und dienen dazu, fehlerhafte Behälter, zum Beispiel nicht vollständig gefüllte oder nicht ordnungsgemäß verschlossene Flaschen auszusondern, die nicht für den Verkauf geeignet sind.

Eine Vorrichtung nach dem Oberbegriff des Anspruches 1 ist aus der DE-A-2 437 798 bekannt. Die Ablenkeinrichtung besteht dabei aus einem keilförmigen Auswerfer, der die ausgewählten Gegenstände auf die zweite Transporteinrichtung abschiebt oder ablenkt. Insbesondere bei Getränkeflaschen, die keine hohe Standfestigkeit besitzen und leicht umkippen, ist die bekannte Ablenkvorrichtung in ihrer Arbeitsgeschwindigkeit beschränkt. Dies ergibt sich insbesondere daraus, daß die Länge des Keils in Förderrichtung nicht wesentlich größer sein darf, als der Durchmesser der Flaschen, da sonst dicht aufeinanderfolgende Flaschen nicht mehr selektiv abgelenkt bzw. durchgelassen werden können. Eine kurze Länge des Keils ist jedoch nur möglich, wenn die Flaschen unter einem relativ großen Winkel abgelenkt werden, was jedoch wiederum nur bei relativ geringen Geschwindigkeiten der Transporteinrichtungen möglich ist.

Eine Ablenkvorrichtung mit mitlaufenden Ablenksegmenten ist aus der US-A-3 361 247 bekannt, wobei die erste Transporteinrichtung aus einem Gliederband besteht, bei dem jedes Glied mit einem querverschiebbaren Ablenksegment verbunden ist, und eine Mehrzahl von Ablenksegmenten zusammen die unter einem Winkel zur ersten Transporteinrichtung liegende Ablenkfläche bildet. Nachteilig ist hierbei, daß sich die einzelnen Ablenksegmente gerade zu dem Zeitpunkt in Bewegung befinden, wenn ein abzulenkender Gegenstand auf sie trifft. Gegenstände mit geringer Standfestigkeit, zum Beispiel Flaschen, werden dabei leicht umgestoßen. Die bekannte Ablenkvorrichtung erfordert außerdem einen sehr großen mechanischen Aufwand, da das gesamte Gliederband mit Ablenksegmenten ausgerüstet werden muß.

Aus der DE-A-2 358 185 ist ebenfalls eine Ablenkvorrichtung bekannt, bei der die Gegenstände, zum Beispiel die Flaschen, durch mit der ersten Transporteinrichtung mitlaufende Ablenksegmente auf die zweite Transporteinrichtung verschoben werden. Die Ablenksegmente werden durch eine Weiche auf eine Führungsbahn geleitet, durch die sie quer zur Förderrichtung verschoben werden. Um bei dieser bekannten Vorrichtung zu verhindern, daß die auszusondernden Gegenstände von den Ablenksegmenten abgleiten, muß deren Breite etwa dem Durchmesser der Gegenstände entsprechen. Die auszusondernden Gegenstände dürfen außerdem nicht in dichter Folge ankommen, sondern müssen durch eine geeignete Einrichtung vereinzelt werden, d. h. der Abstand zwischen den Gegenständen muß eine gewisse Mindestgröße besitzen. Die bekannte Vorrichtung bes'tzt daher zwangsläufig eine relativ große Abmessung, wodurch zum Beispiel das Ausleiten der Gegenstände auf sogenannte Drehteller erschwert wird.

Aus der DE-A-2 555 192 ist eine Vorrichtung zum Ablenken von Gegenständen bekannt, wobei die Transporteinrichtung aus einzelnen schmalen Riemen besteht, die über Walzen laufen. Die Gegenstände werden durch einen Kamm abgelenkt, der von unten zwischen den Riemen nach oben geschoben wird. Diese Vorrichtung ist nur in Fällen anwendbar, in denen der Abstand zwischen den einzelnen Gegenständen relativ groß ist.

Die US-A-3 512 638 beschreibt eine Ablenkvorrichtung, insbesondere für Pakete und ähnliche Behälter. Die Transporteinrichtungen bestehen dabei aus Walzenbahnen, wobei die erste Walzenbahn im Ablenkbereich eine Kurve beschreibt. Die Ablenksegmente werden durch senkrecht zwischen zwei Walzen ausfahrbaren Ablenkrollen gebildet. Um ein Hängenbleiben der Pakete oder sonstigen Gegenstände an den Abrollen zu verhindern, müssen die Walzen der Transportbahn verdickte Bereiche aufweisen und müssen bestimmte dieser Walzen einen reibungserhöhten Belag besitzen. Die einzelnen Ablenkrollen werden durch gesonderte Lichtschranken gesteuert. Nachteilig ist hierbei, daß diese Ablenkvorrichtung nur bei Walzenbahnen anwendbar ist, nicht jedoch bei Transporteinrichtungen mit geschlossener Oberfläche, wie Gliederbänder oder Stahlbändern.

In der Veröffentlichung »Verzweigungen in horizontalen Förderstrecken«, in »Fördern und Heben«, Band 21, 1971, Seiten 232—236 wird eine Ablenkvorrichtung mit Rollenbahnen als Transporteinrichtung beschrieben. Die Ablenkung der ausgewählten Gegenstände erfolgt durch Schwenken der Rollen.

Eine Anpassung an Fördereinrichtungen mit geschlossener Oberfläche ist nicht möglich.

Die Erfindung, wie sie in den Ansprüchen gekennzeichnet ist, löst die Aufgabe, eine Vorrichtung zum seitlichen Ablenken von bestimmten, nach einem Merkmal ausgewählten Gegenständen von einer ersten Transporteinrichtung auf eine zweite Transporteinrichtung zu schaffen, die eine sehr hohe Arbeitsgeschwindigkeit besitzt und an den Transporteinrichtungen selbst keine speziellen Ausrüstungen erfordert.

Ausführungsbeispiele der Erfindung werden nachfolgend anhand der Zeichnung erläutert. Es zeigt

Fig. 1 in Draufsicht eine Vorrichtung mit mechanisch arbeitenden geradlinig ausfahrbaren Segmenten;

Fig. 2 die Steuerungslogik für eine Vorrichtung nach Fig. 1;

Fig. 3 in Draufsicht eine Vorrichtung ähnlich Fig. 1 mit unter einem Winkel ausfahrbaren Segmenten;

Fig. 4 ein Segment im Querschnitt und mit Blickrichtung in Förderrichtung;

Fig. 5 in Draufsicht eine Vorrichtung mit um eine Achse verschwenkbaren Segmenten;

Fig. 6 in einer perspektivischen Darstellung ein Segment der in Fig. 5 gezeigten Ausführungsform;

Fig. 7, 8 und 9 Möglichkeiten für den Verlauf von Lichtschranken bei dicht aufeinanderfolgenden Gegenständen;

Fig. 10 in Seitenansicht die Anordnung der Segmente der Vorrichtung von Fig. 5 und 6;

Fig. 11 die Anwendung der Vorrichtung in Verbindung mit einem Auslaufstern;

Fig. 12 die Anwendung einer Vorrichtung als Eckstation;

Fig. 13 und 14 eine Ausführungsform, bei der das Aus- und Einfahren der Segmente durch Druckfedern unterstützt wird und

Fig. 15 einen Vielfach-Induktivabtaster zur Erzeugung der für die Steuerung der Ablenkeinrichtung benötigten Taktimpulse.

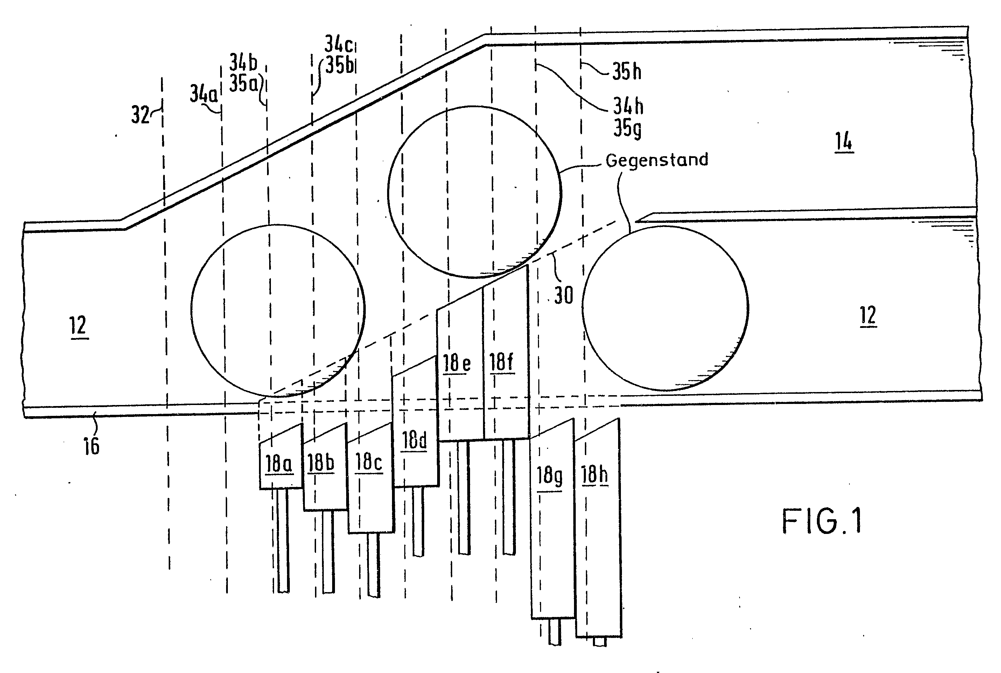

Die in Fig. 1 gezeigte Ablenkvorrichtung besitzt eine erste Transporteinrichtung 12 und eine zweite Transporteinrichtung 14, die z. B. aus einer Stahl- oder Kunststoff-Gliederkette bestehen können. Die Transporteinrichtungen sind seitlich durch Geländer 15, 16 und 17 begrenzt. Die zweite Transporteinrichtung verläuft parallel und unmittelbar benachbart zur ersten Transporteinrichtung. In einem bestimmten Bereich, der sogenannten Ablenkstrecke, sind die Geländer unterbrochen bzw. abgewinkelt, um ein Überleiten von Gegenständen von der ersten Transporteinrichtung auf die zweite Transporteinrichtung zu ermöglichen. In Fig. 1 sind drei Gegenstände dargestellt, von denen der mittlere ausgesondert, d. h. abgelenkt oder ausgeleitet werden soll, während der erste und dritte Gegenstand auf der ersten Transporteinrichtung weiter befördert werden sollen. Der mittlere Gegenstand wird von der zweiten Transporteinrichtung weiter befördert. Das Ablenken eines ausgewählten Gegenstandes erfolgt durch Segmente 18n (n steht für a, b, c . . .). Die Segmente sind in Fördereinrichtung der Transporteinrichtungen fest angeordnet und können etwa senkrecht zu dieser Förderrichtung ausgefahren werden.

Da die auszuleitenden Gegenstände im allgemeinen durch die Ablenkfläche in Förderrichtung geringfügig abgebremst werden, und sich so der Abstand zum vorausgehenden Gegenstand, der nicht ausgeleitet wird, vergrößert bzw. sich der Abstand zu dem nachfolgenden Gegenstand verkleinert, erfolgt das Ausfahren der Segmente vorzugsweise etwa in Richtung der Winkelhalbierenden des von der Ablenkfläche 30 und der ersten Transporteinrichtung 12 gebildeten stumpfen Winkels.

Die Segmente können aus einem senkrechten Bügel 20 und mehreren waagrechten Fingern 22 bestehen. Die Länge der waagrechten Finger 22 wird vorzugsweise von den Ausfahrwegen der einzelnen Segmente bestimmt, so daß das an der Ablenkstrecke unterbrochene Geländer 16 durch einen oder mehrere Leitstäbe 23 ersetzt werden kann, die die Gegenstände sauber führen, wenn die einzelnen Segmente eingefahren sind. Die Ablenkstrecke ist der durch das erste und letzte Segment begrenzte Bereich. Durch einen Schaft 24 ist jedes Segment 18 mit dem Kolben 25 eines pneumatischen Zylinders 26 verbunden. In Abhängigkeit von der Stellung eines Magnet-Steuerventils 28 wird das Segment ausgefahren oder eingefahren.

Im ausgefahrenen Zustand bilden die Angriffsflächen der Segmente, z. B. die Vorderkanten der Finger 22, eine Ablenkfläche 30, durch die die ausgewählten Gegenstände auf die zweite Transporteinrichtung abgelenkt werden. Die Segmente sind unterschiedlich weit ausfahrbar und die Angriffsfläche der Segmente ist entgegen der Fördereinrichtung abgeschrägt. Zum Ablenken eines Gegenstandes wird das Segment 18a so weit ausgefahren, daß seine Angriffsfläche mit dem Geländer 16 bündig ist, und dann werden die übrigen Segmente 18b bis 18h soweit ausgefahren, daß ihre Angriffsfläche jeweils bündig mit der Angriffsfläche des vorausgehenden Segmentes ist. Die ersten Segmente, z. B. 18a bis 18c, besitzen vorzugsweise eine gekrümmte Angriffsfläche, so daß das Geländer 16 in einer glatten Kurve in die Ablenkfläche 30 übergeht. Durch den glatten Übergang des Geländers 16 in die Ablenkfläche 30 wird auch bei hohen Arbeitsgeschwindigkeiten ein stoßfreies Ablenken der ausgewählten Gegenstände ermöglicht.

Die Breite der Segmente 18n hängt von der Abmessung der Gegenstände in Förderrichtung und dem Abstand der Gegenstände voneinander ab. Die Breite der Segmente ist vorzugsweise kleiner als etwa die Hälfte oder etwa ein Drittel des Abstandes der Vorderkanten aufeinanderfolgender Gegenstände. Folgen die Gegenstände unmittelbar aufeinander, so soll die Breite der einzelnen Segmente nicht größer sein als etwa die Hälfte der Abmessung der Gegenstände in Förderrichtung. Vorzugsweise soll die Segmentbreite kleiner als etwa ein Drittel dieser Abmessung sein. Die Segmente müssen nicht gleiche Breite haben und die ersten Segmente können z. B. eine etwas größere Breite besitzen. Die Anzahl der Segmente hängt von der Größe der Gegenstände und der Fördergeschwindigkeit ab.

Bei der in den Figuren 1, 3 und 4 dargestellten Ausführungsform werden die Segmente in der Ebene der Transporteinrichtungen und senkrecht zur Förderrichtung bewegt. Es ist jedoch auch möglich, die Segmente vertikal von oben einzufahren. Je nach Art der Gegenstände können die Segmente einzelne Finger 22 aufweisen oder kann die Angriffsfläche der Segmente durch eine geschlossene Metall- oder Kunststofffläche gebildet werden. Den Winkel, den die Ablenkflächen 30 mit der Förderrichtung der ersten Transporteinrichtung 12 bildet, hängt von der Fördergeschwindigkeit ab und ist um so kleiner, je höher die Fördergeschwindigkeit ist.

Durch feine Luftdüsen in der Angriffsfläche der Segmente kann ein Luftkissen zwischen den Gegenständen und den Segmenten gebildet werden. Durch ein derartiges Luftkissen kann die Reibung zwischen den Gegenständen und den Angriffsflächen der Segmente verringert werden und ein abzulenkender Gegenstand in Ablenkrichtung sogar noch beschleunigt werden. Durch derartige Luftkissen wird auch das teilweise Überholen eines abgelenkten Gegenstandes durch einen nachfolgenden Gegenstand vermieden, da der abgelenkte Gegenstand nicht abgebremst wird.

In Fig. 1 ist nur eine Reihe von Segmenten gezeigt, die sich an dem in der Figur unteren Rand der ersten Transporteinrichtung befinden. Zur Verbesserung der Führung der Gegenstände kann das schrägverlaufende Geländer 15 ebenfalls durch eine Reihe von Segmenten ersetzt werden, deren Angriffsflächen parallel zur Förderrichtung der ersten Transporteinrichtung verlaufen und die so gesteuert werden, daß sie einen festen Abstand, der der Breite der ersten Transporteinrichtung entspricht, von den Segmenten 18n besitzen. Die weiteren Segmente können unter Einhaltung dieses Abstandes fest mit den Segmenten 18n verbunden sein. Wenn in der ersten Transporteinrichtung abstromseitig der Ablenkvorrichtung ein Stau auftritt, ist eine derartige Reihe von zweiten Segmenten besonders vorteilhaft, da sie ein nicht beabsichtigtes Ausweichen der Gegenstände auf die zweite Transporteinrichtung verhindern.

Bei der vorausgehend beschriebenen Ausführung stellt das Ausfahren der Segmente eine reine Translationsbewegung dar.

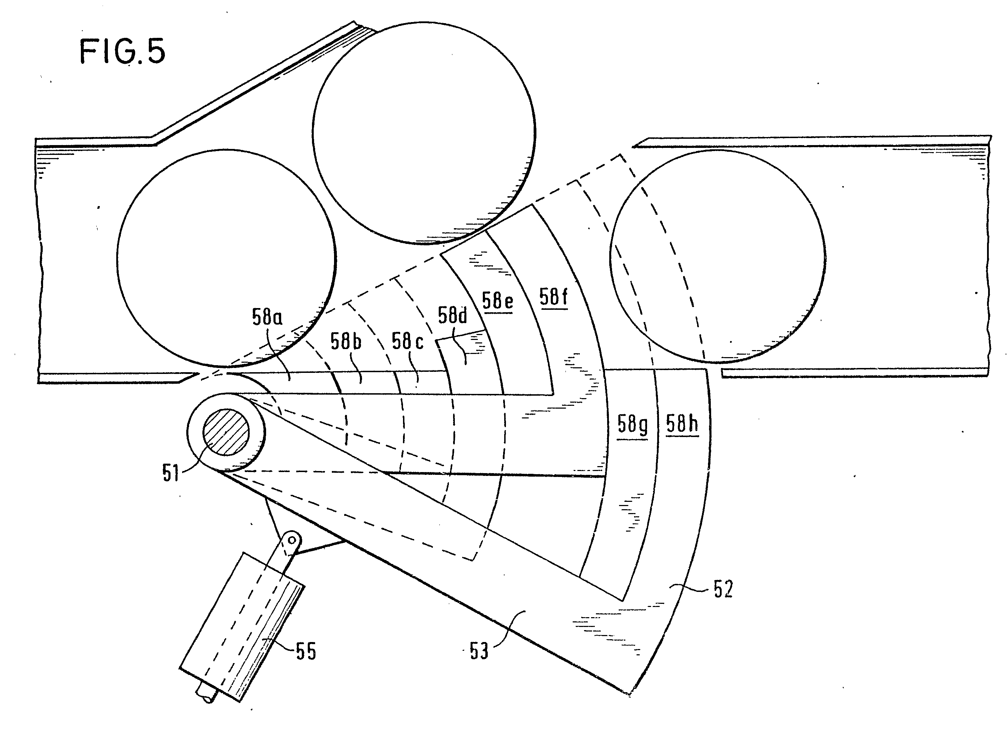

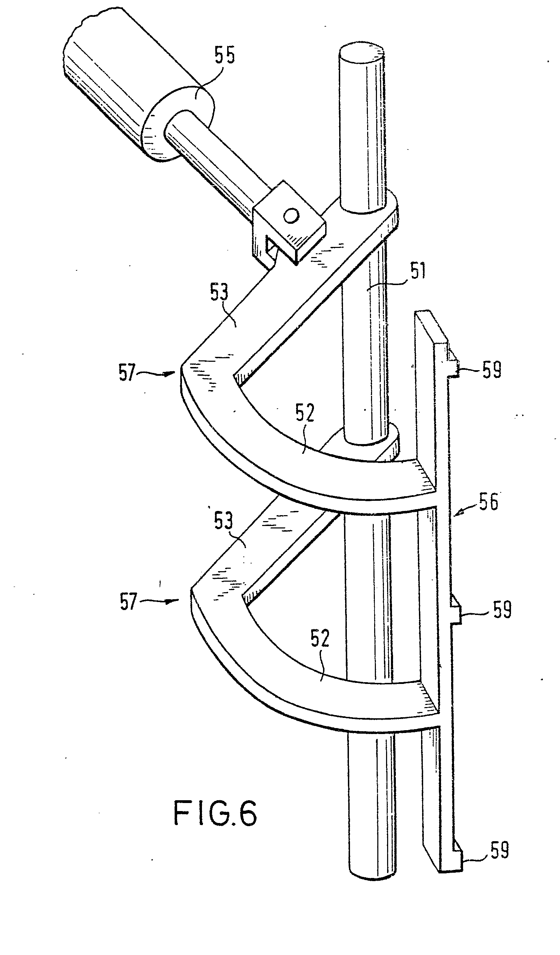

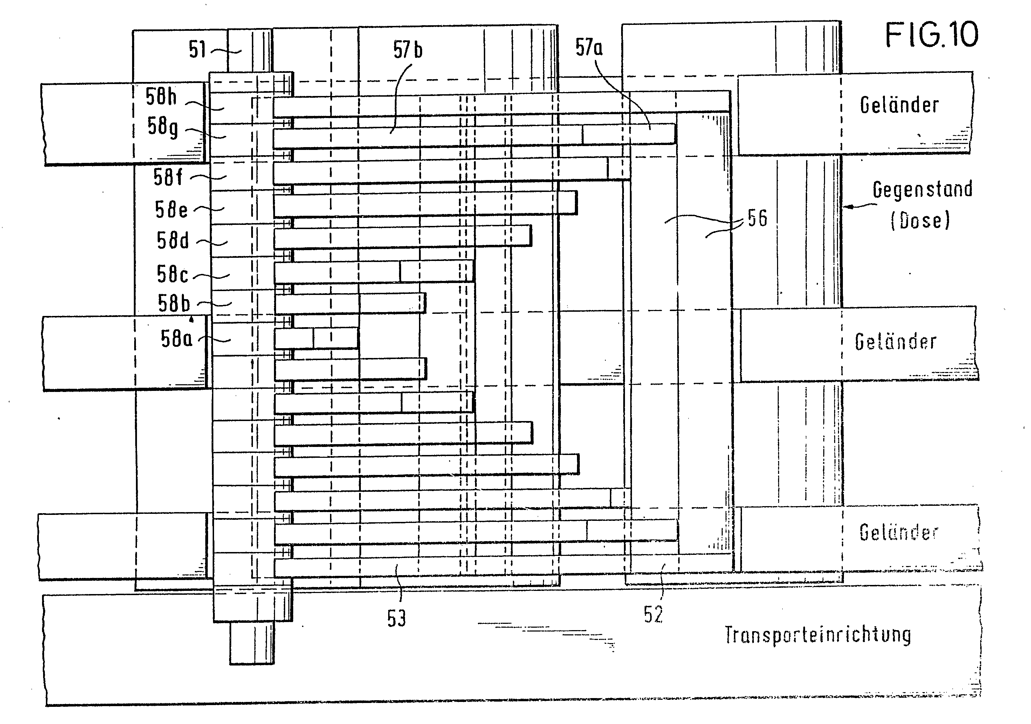

In einer alternativen Ausführung beruht das Ausfahren der Segmente auf einer Rotationsbewegung (Fig. 5, 6 und 10). Hierbei sind die Segmente 58n einzeln drehbar an einer senkrecht, etwa in Höhe des ersten Segments 58a, direkt neben der ersten Transporteinrichtung stehenden Achse 51 aufgehangen. Jedes Segment wird durch einen Pneumatikzylinder oder durch einen Elektromagneten 55, der, um die Hebelwirkung auszunutzen, nahe der Drehachse angreift, ausgefahren. Die Segmente selbst bestehen aus vorzugsweise zwei Winkeln 57, die jeweils einen konzentrisch zu dem Drehpunkt gebogenen Schenkel 52 besitzen. Diese gebogenen Schenkel der beiden Winkel enden an einem senkrechten Bügel 56, der auf der gegenüberliegenden Seite eine oder mehrere Erhöhungen besitzt (Gleitnasen 59), an denen die Gegenstände entlanggleiten können. Bügel und Gleitnasen bilden mit dem Radiusvektor zur Segmentspitze einen spitzen Winkel derart, daß sich bei eingefahrenen Segmenten in Förderrichtung eine glatte Ebene ergibt, die dann zwangsläufig durch Herausschwenken der einzelnen Segmente in eine glatte Ablenkebene mit beliebigem Winkel zur Förderrichtung übergeht.

Mit den geraden Schenkeln 53 der beiden Winkel sind die Segmente, wie oben erwähnt, frei drehbar an einer feststehenden Achse 51 aufgehangen.

Als weitere Alternative ist natürlich auch eine neben der ersten Transporteinrichtung waagrecht liegende Drehachse als Aufhängung für die Geländersegmente möglich. Diese Drehachse kann sich sowohl in der durch die Oberfläche der Transporteinrichtungen gegebenen Ebene als auch oberhalb oder unterhalb dieser Ebene befinden; die Richtung der Drehachse kann parallel zur Förderrichtung oder zur Ablenkfläche liegen oder auch einen Zwischenwert annehmen.

Der Grundgedanke der Erfindung besteht nun darin, nicht alle Segmente gleichzeitig aus- und einzufahren, sondern zu jedem Zeitpunkt nur diejenigen Segmente auszufahren, die zu diesem Zeitpunkt oder unmittelbar danach zum Ablenken des Gegenstandes tatsächlich benötigt werden, d. h. diesen Gegenstand berühren. Ein Ablenken ist dadurch auch in Fällen möglich, in denen die Gegenstände unmittelbar aufeinanderfolgen, d. h. zwischen ihnen kein Abstand vorhanden ist, ohne daß die Gegenstände, die auf der ersten Transporteinrichtung verbleiben, beeinträchtigt werden. In Fig. 1 sind z. B. die Segmente 18a bis 18c, die den in der Fig. 1 linken Gegenstand berühren würden, eingefahren und ebenso sind die Segmente 18g und 18h eingefahren, da sie den rechten Gegenstand berühren würden. Ausgefahren sind nur die Segmente 18e und 18f, da sie gerade an dem mittleren Gegenstand angreifen, der aussortiert werden soll. Das Segment 18b ist gerade teilweise eingefahren.

Bei den vorausgehend beschriebenen Ausführungsformen befinden sich diejenigen Segmente im ausgefahrenen Zustand, die zu dem betreffenden Zeitpunkt oder unmittelbar danach an dem ausgewählten Gegenstand angreifen. In einer bevorzugten Ausführungsform können sich zu jedem Zeitpunkt diejenigen Segmente im ausgefahrenen Zustand befinden, die mit dem unmittelbar vorausgehenden und dem unmittelbar nachfolgenden Gegenstand, die auf der ersten Transporteinrichtung verbleiben, nicht kollidieren. Dadurch befindet sich während eines Ablenkvorganges die maximale Anzahl von Segmenten im ausgefahrenen Zustand.

Zur Feststellung der Gegenstände, die abgelenkt werden müssen, werden bestimmte Merkmale des Gegenstandes, z. B. Füllstandshöhe in Flaschen oder das Vorhandensein eines Flaschenverschlusses beim Sortieren von Flaschen, mechanisch, z. B. durch eine Waage oder Abtastelemente, oder photoelektrisch, geprüft.

Bei der in Fig. 1 gezeigten Ablenkvorrichtung findet die Prüfung an der Prüflinie 32 statt, die sich vorzugsweise unmittelbar vor der Ablenkstrecke befindet. Wenn die Prüfung zu einem früheren Zeitpunkt erfolgt, so muß sie durch geeignete Mittel, z. B. ein Schieberegister, zeitlich so verzögert oder gespeichert werden, daß das Prüfergebnis der Steuereinrichtung für die Segmente zu dem Zeitpunkt zugeführt wird, zu dem der betreffende Gegenstand in die Ablenkstrecke eintritt.

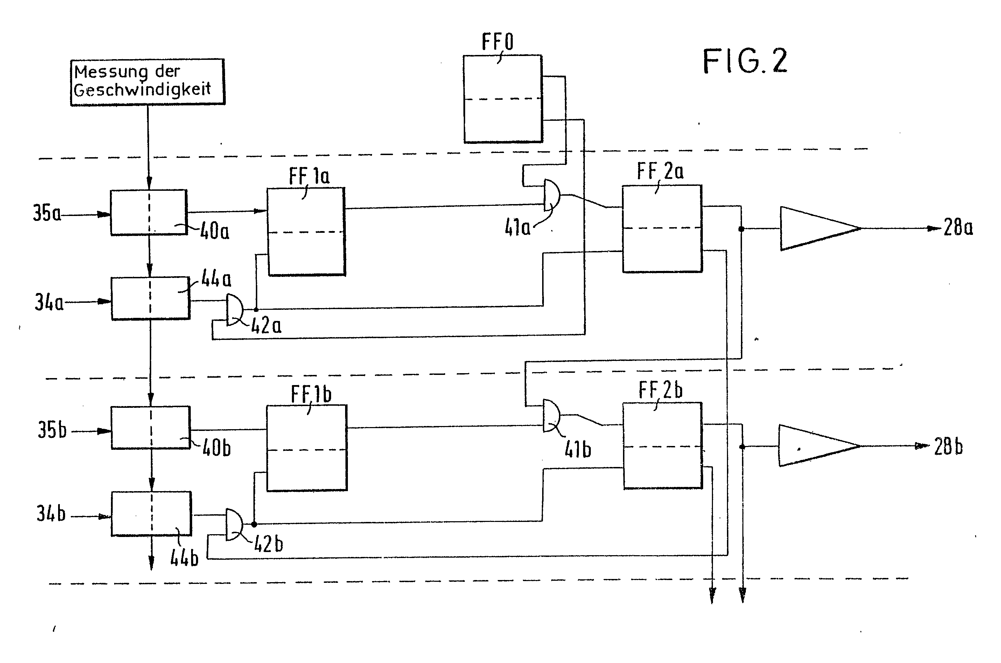

Die Einrichtung zum Steuern der Segmente weist im einfachsten Fall die vorausgehend erwähnten Prüfeinrichtungen, Lichtschranken 34a bis 34h zur Erzeugung eines Einfahrbefehles, Lichtschranken 35a bis 35h zur Freimeldung des jeweiligen Segmentes und eine Steuerelektronik (Fig. 2) auf. Bei der in Fig. 1 und 2 dargestellten Steuereinrichtung wird dabei diejenige Alternative gezeigt, bei der jeweils die maximale Anzahl von Segmenten ausgefahren ist, d. h. alle Segmente, die nicht mit dem unmittelbar vorausgehenden und dem unmittelbar nachfolgenden Gegenstand, die nicht abgelenkt werden sollen, kollidieren. Die Lichtschranke 35a gibt nach dem Durchgang des Gegenstandes, der dem abzulenkenden Gegenstand vorausgeht, eine Freimeldung ab. Die Freimeldung wird durch ein Zeitglied 40a um eine Zeitdauer t verzögert und auf den Setzeingang des Flip-Flops 1a gegeben. Der Betrag der Zeitverzögerung hängt von der Geschwindigkeit der ersten Transporteinrichtung, der Ansprechzeit der Steuereinrichtung und der Lage der Lichtschranke 35a ab. Die Freimeldung ist eine Voraussetzung für das Ausfahren eines Segmentes und die Zeitverzögerung soll so bemessen sein, daß derjenige Gegenstand, von dem die Freimeldung abgeleitet wird, von dem auf Grund der Freimeldung dann ausfahrenden Segment nicht mehr getroffen wird. Wie erwähnt, hängt die Zeitverzögerung dann von der Geschwindigkeit der Transporteinrichtung ab. Da sich die Transportgeschwindigkeit während des Betriebes ändern kann, ist die durch das Zeitglied 40a eingeführte Verzögerung vorzugsweise variabel. Bei kleiner Transportgeschwindigkeit ist die Zeitverzögerung dabei größer als bei hoher Transportgeschwindigkeit. Das am normalen Ausgang des Flip-Flops 1a erhaltene Signal wird über ein UND-Glied 41a dem Setzeingang eines Flip-Flops 2a zugeführt. Der zweite Eingang des UND-Gliedes 41a ist mit dem normalen Ausgang eines Flip-Flops 0 verbunden, das von der Prüfeinrichtung gesetzt wird und sich z. B. im gesetzten Zustand befindet, wenn der Gegenstand, der dem Gegenstand folgt, von dem die Freimeldung abgeleitet wurde, aussortiert werden soll, da er z. B. fehlerhaft ist. Der normale Ausgang des Flip-Flops 2a steuert über einen Leistungstreiber ein Steuerventil 28, das z. B. einen pneumatischen Zylinder 26 betätigt, der das Segment 18a ausfährt. Das Segment 18a wird immer ausgefahren, wenn sich ein abzulenkender Gegenstand diesem Segment nähert und sich der unmittelbar vorausgehende Gegenstand bereits an diesem Segment vorbeibewegt hat.

Die dem Segment 18b zugeordneten Steuerelektronik ist, abgesehen davon, daß der zweite Eingang des UND-Gliedes 41b nicht mit dem Flip-Flop 0, sondern mit dem normalen Ausgang des Flip-Flops 2a verbunden ist, identisch der dem Segment 18a zugeordneten Steuerelektronik. Das Segment 18b wird demnach ausgefahren, wenn eine Freimeldung der diesem Segment zugeordneten Lichtschranke vorliegt und wenn das Segment 18a ausgefahren ist. Die Steuerelektronik der weiteren Segmente ist analog der des Segments 18b. Ein beliebiges Segment wird demnach ausgefahren, wenn für dieses Segment eine Freimeldung vorliegt und das vorausgehende Segment ausgefahren ist.

Durch weitere Lichtschranken 34n wird ein Einfahrbefehl von der Vorderkante jedes Gegenstandes abgeleitet. Jedem Segment 18n ist dabei neben einer Lichtschranke 35n für die Freimeldung auch eine Lichtschranke 34n für den Einfahrbefehl zugeordnet. Der Einfahrbefehl wird über Zeitglieder 44n verzögert. Die Lichtschranke 34n für den Einfahrbefehl eines Segmentes befindet sich dabei etwa eine Segmentbreite vor der Lichtschranke für die Freimeldung des betreffenden Segmentes, wenn Zeitglieder 40n und 44n mit gleicher Zeitverzögerung verwendet werden. Der Ausgang des Zeitgliedes 44a ist mit dem einen Eingang eines UND-Gliedes 42a verbunden. Der andere Eingang des UND-Gliedes 42a ist mit dem invertierten Ausgang des Flip-Flops 0 verbunden. Durch ein L-Ausgangssignal des UND-Gliedes 42a wird das Flip-Flop 1a und das Flip-Flop 2a rückgesetzt. Durch Rücksetzen des Flip-Flops 2a gelangt ein 0-Signal zu dem Leistungstreiber des Segments 18a und wird dieses Segment dadurch eingefahren. Das Einfahren des Segments 18a erfolgt demnach, wenn ein Gegenstand die Einfahrbefehl-Lichtschranke 34 unterbricht und das Flip-Flop 0 rückgesetzt ist. Diese Bedingungen sind nach dem Ablenken eines Gegenstandes erstmals bei dem ersten nachfolgenden, nicht abzulenkenden Gegenstand erfüllt. Das UND-Glied 42a hat eine doppelte Aufgabe, nämlich erstens wird durch es ein unnötiges Einfahren der Segmente verhindert, falls zwei aufeinanderfolgende Gegenstände abgelenkt werden sollen, und zweitens wird durch es verhindert, daß durch den Einfahrbefehl, der von einem abzulenkenden Gegenstand abgeleitet wird, ein Segment eingefahren wird, bevor sich dieser Gegenstand an diesem Segment vorbeibewegt hat.

Das Segment 18b wird eingefahren, wenn die betreffende Einfahrbefehl-Lichtschranke 34b durch einen Gegenstand unterbrochen wird und das vorausgehende Segment 18a eingefahren ist, d. h. das Flip-Flop 2a rückgesetzt ist. Die Segmente 18c bis 18h werden unter analogen Bedingungen eingefahren. In der Praxis arbeitet die Steuerungseinrichtung in der Weise, daß durch den letzten fehlerfreien Gegenstand z. B.

die ersten fünf Segmente 18a bis 18e freigemeldet sind. Wenn dann von der Prüfeinrichtung ein fehlerhafter Gegenstand festgestellt wird, so wird das Flip-Flop 0 gesetzt und werden praktisch gleichzeitig die ersten fünf Segmente ausgefahren. Die Segmente 18f, 18g usw. werden erst dann ausgefahren, wenn sie ebenfalls freigemeldet sind, d. h. die ihnen zugeordnete Freigabebefehl-Lichtschranken 35f, 35g usw. nicht mehr durch den letzten fehlerfreien Gegenstand unterbrochen sind.

Der Einfachheit halber ist bisher angenommen worden, daß sich die Lichtschranken 34a bis 34h und 35a bis 35h an den in Figur 1 entsprechend bezeichneten Linien befinden. Zum Beispiel bei Flaschen, die am Flaschenhals abgetastet werden, stellen die unterbrochenen Linien, die mit 34a bis 34h und mit 35a bis 35h bezeichnet sind, nicht die tatsächlichen Abtastlinien, d. h. die Position der Lichtschranken dar, sondern markieren sie die Stelle, an der sich die Vorderkante bzw. Hinterkante des steuernden Gegenstandes im Moment der Abtastung, d. h. der Erzeugung des Steuerimpulses befindet. Bei der tatsächlichen Lage der Lichtschranken ist die Fördergeschwindigkeit und die Ansprechzeit der Zylinder und Ventile sowie die Aus- bzw. Einfahrzeit der Segmente zu berücksichtigen. Die Lichtschranken müssen daher eine Distanz vor den zugeordneten Segmenten angeordnet werden, die sich im wesentlichen aus dem Produkt von Fördergeschwindigkeit und der Summe von Ansprechzeit und Aus- bzw. Einfahrzeit ergibt.

Je Segment werden normalerweise eine Freimelde-Lichtschranke (Dunkel-Hell-Übergang) und eine Einfahrbefehl-Lichtschranke (Hell-Dunkel-Übergang) benötigt. Liegt die Ausfahrzeit von Segment n etwa in der gleichen Größenordnung wie die Einfahrzeit von Segment n + 1, dann kann man die Freimelde-Lichtschranke von n und die Einfahrbefehl-Lichtschranke von n + 1, wie in Fig. 1 gezeigt, zu einer einzigen Lichtschranke zusammenfassen, von deren Ausgangssignal durch Differenzieren die dem Hell-Dunkel-Übergang entsprechende Flanke zum Einfahrimpuls und die dem Dunkel-Hell-Übergang entsprechende Flanke zum Freimeldeimpuls wird.

Liegen alle Ein- und Ausfahrzeiten in der gleichen Größenordnung, dann sind zudem die Abstände zwischen den Lichtschranken etwa gleich den Segmentbreiten (Fig. 1). Zum Beispiel benötigt ein Luftzylinder mit Rückstellfeder getrennte Einfahr- und Freimelde-Lichtschranken, während die wegen der höheren Stellgeschwindigkeit bevorzugt verwendeten doppeltwirkenden Luftzylinder mit einer Anordnung nach Fig. 1 auskommen.

Es ist auch möglich, nicht für jedes Segment n getrennte Lichtschranken 34n und 35n vorzusehen, sondern insgesamt nur eine einzige Einfahrbefehl-Lichtschranke 34 und eine einzige Freimelde-Lichtschranke 35 am Eingang der Ablenkvorrichtung vorzusehen, z. B. an der Position der oben genannten Lichtschranke 35a und 34a. Die Freimeldungen und Einfahrbefehle für die Segmente 18b bis 18h werden dann dadurch erhalten, daß die von der einzigen Freimeldungs-Lichtschranke und der einzigen Einfahrbefehl-Lichtschranke abgeleiteten Signale entsprechend der Fördergeschwindigkeit der ersten Transporteinrichtung und dem Abstand der Segmente zeitlich verzögert werden.

Um Fehlfunktionen auszuschließen, muß die Lage der Abtastsysteme so gewählt werden, daß bei vorgegebener Form und vorgegebenem Abstand der Gegenstände die einzelnen Gegenstände sicher voneinander unterschieden (aufgelöst) werden können und die Triggerimpulse (Freimeldungen, Einfahrbefehle) mit einer bestimmten, im wesentlichen von der Geschwindigkeit der Gegenstände abhängigen Genauigkeit reproduziert werden können.

Bei größeren Abständen (so groß, daß der Nachfolger eines abzulenkenden Gegenstandes diesen während des Ausleitprozesses nicht überholt) können Lichtschranken, die in Ausfahrrichtung der Segmente strahlen, sicher die geforderten Triggerimpulse (Freimeldung bzw. Einfahrbefehl) liefern. Hierbei ist es unerheblich, daß bei dem Prinzip der Steuerung auf Vorgänger und Nachfolger der auszuleitende Gegenstand selbst auch Triggerimpulse liefert, da diese Impulse durch die in Fig. 2 angegebene Schaltung unterdrückt werden. Bei kleineren Abständen zwischen den Gegenständen bestimmt allein deren Form die Lage und Richtung der Lichtschranken.

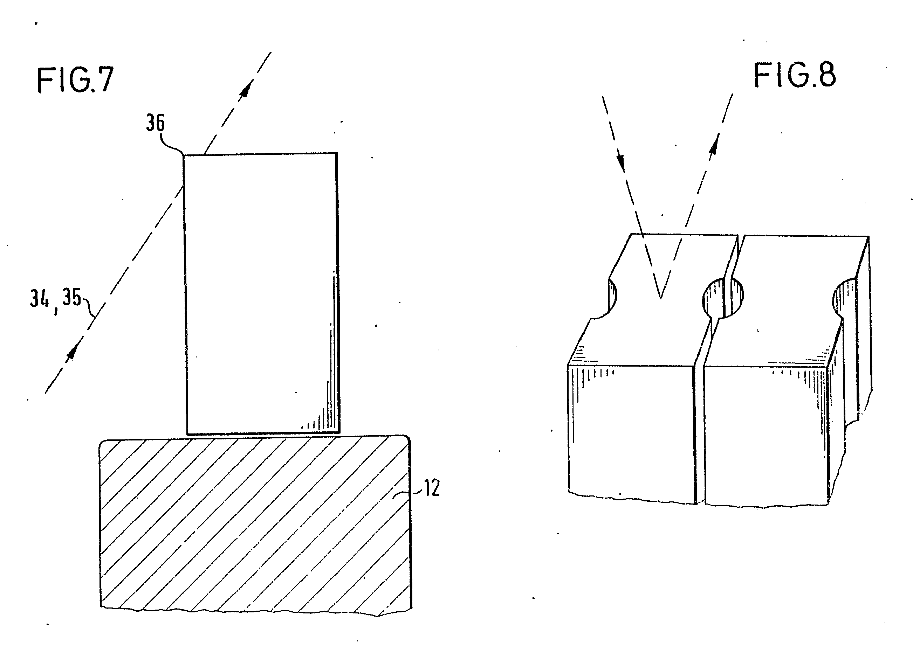

So wird man z. B. Flaschen in Halshöhe abtasten, wobei die Richtung der Lichtschranken etwa der der Winkelhalbierenden des von Ablenkebene und erster Transporteinrichtung gebildeten stumpfen Winkels entspricht. Durch schräg nach oben oder unten verlaufende Lichtschranken (Fig. 7) können Gegenstände abgetastet werden, die zusammen keine kontinuierliche in Förderrichtung verlaufende Kante 36 bilden, z. B. zylindrische Gegenstände wie Konservendosen. Gegenstände, die zusammen keine kontinuierliche geschlossene Oberfläche bilden, können mit geeigneten Reflexlichtschranken von oben von der Ausleitseite abgetastet werden (Fig. 8).

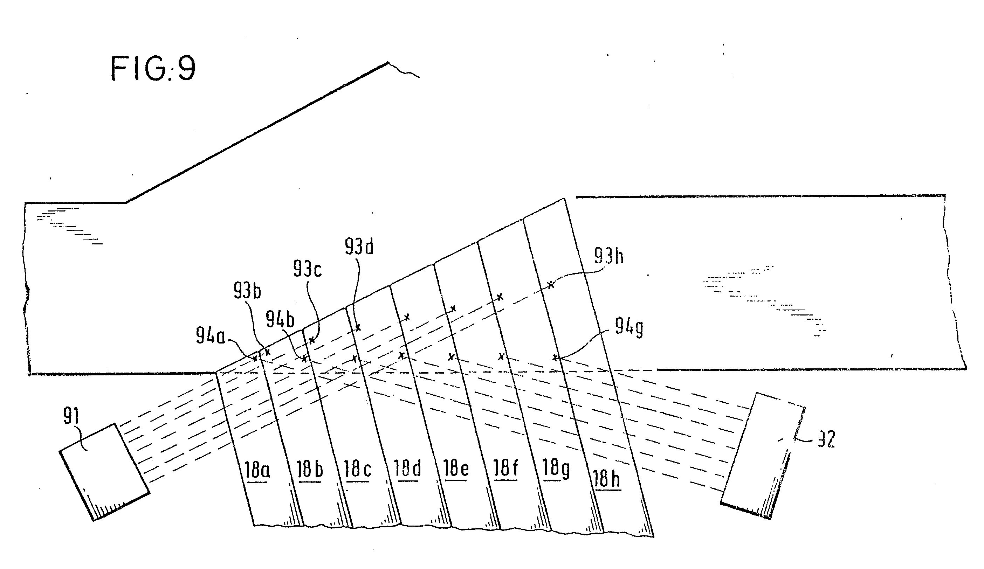

Durch das Prinzip der Steuerung auf Vorgänger und Nachfolger wird eine besonders günstige in Fig. 9 dargestellte Lichtschrankenanordnung ermöglicht. Die Lichtschrankensender 93b bis 93h und 94a bis 94g sind hierbei in die Finger 22 integriert. Die Sender können z. B. Infrarot-Leuchtdioden sein, können aber auch Lichtleiter sein, die zu feststehenden Lichtschrankeneinheiten führen.

Die Strahlrichtungen der Lichtschrankensender 93b bis 93h, die die Einfahrbefehle liefern, verlaufen von den Sendern in den einzelnen Segmenten vorzugsweise parallel zur Ablenkfläche zu einem ersten Lichtschrankenempfängerblock 91. Die Strahlrichtungen der Freimelde-Lichtschranken verlaufen von Sendern 94a bis 94g in den Segmenten zu einem zweiten Lichtschrankenempfängerblock 92. Die Zuordnung der Lichtschranken ist so gewählt, daß jedes der Segmente 18b bis 18h bei einem herannahenden nicht auszuleitenden Gegenstand durch das Signal seiner Einfahr-Lichtschranke eingefahren wird und jedes der Segmente 18a bis 18g bei einem auszuleitenden Gegenstand das nächste Segment abhängig von dem vorangehenden Gegenstand freigemeldet bzw. ausgefahren wird.

Das erste Segment 18a wird in diesem Fall durch die Prüflichtschranke (Prüflinie 32) gesteuert. Die Position von Sender und Empfänger kann auch vertauscht sein, so daß die Blöcke 91 und 92 Sender sind und sich die Empfänger in den Segmenten befinden.

Der Lauf der einzelnen Gegenstände kann außerdem durch induktive oder kapazitive Näherungsschalter, Ultraschall-, Luftschranken etc. oder mit Video-(CCD)-Kameras verfolgt werden.

Solche Kamerasysteme werden nicht nur bei schwierig aufzulösenden Gegenständen eingesetzt, sondern auch bei Ablenkvorrichtungen, die verschiedene Ausführungsformen bestimmter Gegenstände in wechselndem Betrieb bearbeiten müssen (z. B. Füllstands- und Verschlußkontrolle bei auf mehreren Flaschensorten einstellbaren Getränkeabfüllanlagen).

Die Vorteile der vorausgehend beschriebenen Steuerungsverfahren bestehen darin, daß die Segmente zum frühesten möglichen Termin ausgefahren werden und zu dem Zeitpunkt, zu dem der abzulenkende Gegenstand auf ein Segment trifft, nicht mehr in Bewegung sind.

Es wird dadurch verhindert, daß die Gegenstände durch die sich bewegende Segmente umgestoßen werden. Dadurch, daß erst ein nachfolgender Gegenstand den Befehl zum Einfahren der Segmente gibt, wird erreicht, daß einerseits bei größeren Abständen der Gegenstände ein Gegenstand durch die von den Segmenten gebildete Ablenkfläche ausgeleitet wird und andererseits bei kleinen Abständen der Gegenstände und dichter Folge mit Sicherheit auch die letzten Segmente so eingefahren werden, daß sie den Transport der Gegenstände nicht behindern. Da die Fördergeschwindigkeit eines Gegenstandes während des Ablenkens verringert werden kann, ist es dabei möglich, daß die letzten Segmente bereits eingefahren werden, bevor der Gegenstand vollständig auf die zweite Transporteinrichtung ausgeleitet ist, da der nachfolgende Gegenstand den ausgeleiteten Gegenstand zu überholen beginnt, und daher der Einfahrbefehl von dem überholenden Gegenstand scheinbar zu früh gegeben wird. Der nachfolgende, überholende Gegenstand übernimmt dabei jedoch zwangsläufig eine Stützfunktion und schiebt seinen Vorgänger gänzlich von der ersten Transporteinrichtung auf die zweite Transporteinrichtung.

Ein weiterer Vorteil besteht darin, daß bei mehreren Gegenständen, die nacheinander abgelenkt werden, ungeachtet der Abstände dieser Gegenstände, die Segmente nur einmal ausgefahren und bei dem nächstfolgenden Gegenstand, der nicht ausgeleitet werden soll, da er z. B. fehlerfrei ist, wieder eingefahren werden. Würden die Freimeldung und der Einfahrbefehl von einem Gegenstand selbst, statt von dem vorausgehenden und dem nachfolgenden Gegenstand abgeleitet, so würden in dem vorausgehend genannten Fall die Segmente für jeden einzelnen Gegenstand ausgefahren und wieder eingefahren.

Die Unabhängigkeit der Steuerung von dem auszuleitenden Gegenstand selbst ist außerdem vorteilhaft, da die Steuerung auf die Weise von der Form und der Lage eines Gegenstandes unabhängig ist. Wird die Steuerung dagegen von dem abzulenkenden Gegenstand selbst abgeleitet, so wird die Erfassung verschiedenartiger Gegenstände durch Lichtschranken schwierig oder unlösbar. Durch die Steuerung der Segmente in Abhängigkeit von dem vorausgehenden und dem nachfolgenden Gegenstand wird es zum Beispiel möglich, aus einer Reihe zylindrischer Flaschen Flaschen anderer Form, z. B. viereckige Flaschen, oder umgefallene Flaschen und sogar Flaschenböden und allgemein zerbrochene Flaschen und Glasbruch auszusortieren. Mit bekannten Sortiergeräten ist dies nicht möglich.

Die Arbeitsgeschwindigkeit der vorausgehend beschriebenen Ausführungsformen der erfindungsgemäßen Ablenkvorrichtung wird begrenzt durch die Trägheit der Steuerventile 28 und der pneumatischen Zylinder 26. Die Zeit, die benötigt wird von der Ansteuerung bis zum Erreichen der gewünschten Endstellung (eingefahren — ausgefahren) eines pneumatischen Zylinders, läßt sich im wesentlichen in drei Abschnitte untergliedern:

1. Schaltzeit des Steuerventils 28;
2. Zeit, in der im Zylinder 26 der Losbrechdruck erreicht und der Kolben 25 die Haftreibung überwunden hat, d. h. bis sich die Kolbenstange bewegt (Losbrechzeit);
3. Zeit der Bewegung der Kolbenstange (Bewegungszeit).

Während die Schaltzeit des Steuerventils relativ konstant ist, müssen die Losbrechzeit und die Bewegungszeit mit einem Sicherheitszuschlag belegt werden, denn ein Kolben, der nur hin und wieder betätigt wird, ist langsamer als einer, der kontinuierlich arbeitet und die Kolbendichtung beginnt in der Ruhelage nach einigen Sekunden im erstarrten Öl- und Fettfilm an den Zylinderwandungen zu kleben. Zum Anfahren der Kolbenstange ist also in den meisten Fällen eine wesentlich höhere Kraft (Druck auf Kolben) nötig als zu ihrer Weiterbewegung.

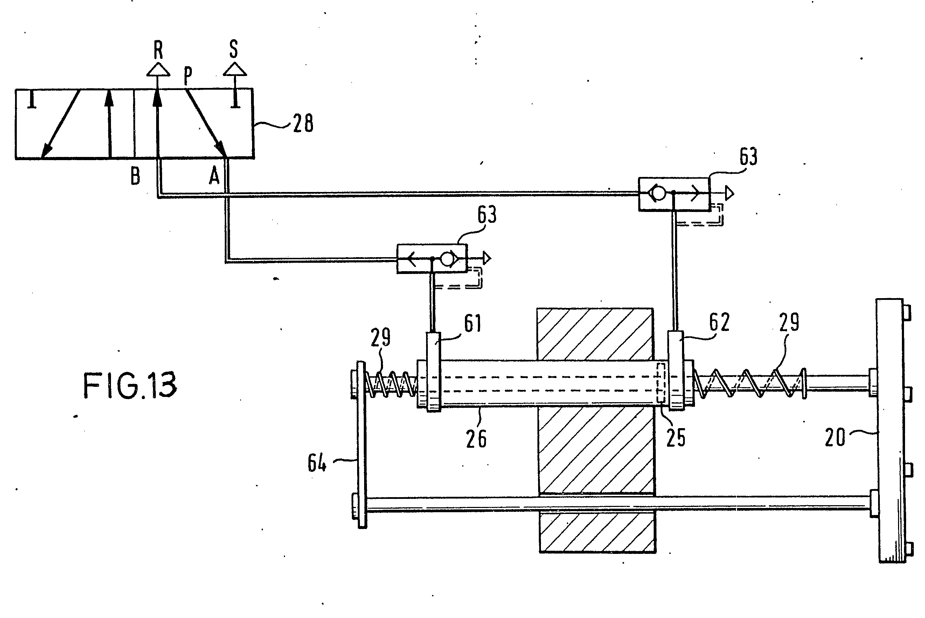

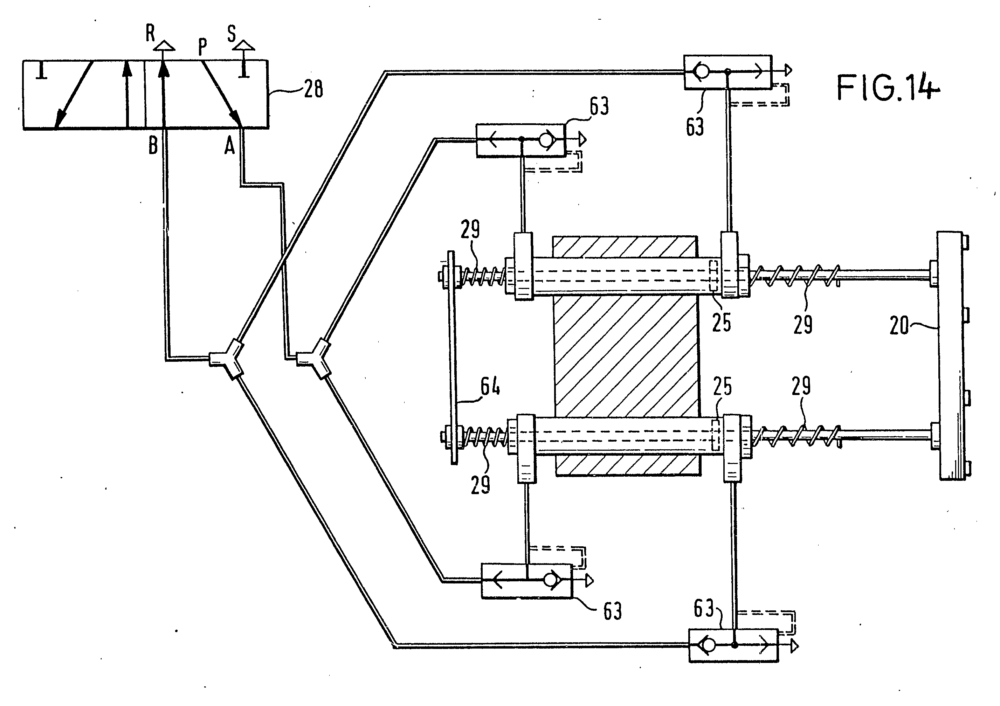

Eine wesentliche Verkürzung der Losbrechzeit, nämlich auf weniger als 50%, wird bei einem doppeltwirkenden Zylinder 26 erreicht, indem die zum Losbrechen der Kolbenstange benötigte Energie nicht mehr nur durch die beaufschlagte Druckluft (Losbrechdruck) aufgebracht wird, sondern von einer Feder 29 (Fig. 13 und 14), in der die benötigte Energie als potentielle Energie, die von dem vorangehenden Hub in anderer Richtung aufgebracht wurde, gespeichert ist.

Die Kolbenstange jedes doppeltwirkenden Zylinders 26 der Segmente trägt dazu auf jeder Zylinderseite eine Schraubendruckfeder. Die Federwege sind kurz im Verhältnis zur Hublänge des Kolbens, z. B. halb so lang, und ihre Kräfte sind so bemessen und Gegenlager in solchen Abständen vom Kolben angeordnet, daß die Federn in den Endlagen zwischen etwa 2 und 15 mm (je nach Hublänge) zusammengedrückt werden, bis sich das Gleichgewicht der Kräfte einstellt. In Fig. 13 bilden das Joch 64 und der Bügel 20 die Gegenlager. Die Endlage des Kolbens ist also die Position, in der die Federkraft gleich der durch die Druckkraft erzeugten Kolbenkraft ist. Die Federn können auch innerhalb des Zylinders angeordnet sein oder als Blattfedern ausgebildet sein.

Im Normalfall kann man Federn mit einer konstanten Federrate benutzen. Wenn aber der Anteil der kinetischen Energie sehr hoch ist oder nur minimales Überschwingen in der Endlage gefordert wird, muß man Federn mit einer exponentiellen oder progressiven Kennlinie oder mehrere konzentrisch angeordnete Federn unterschiedlicher Federraten verwenden.

Bei dem oben aufgeführten Zylinder sei nun der eine Anschluß 61 mit Druckluft beaufschlagt, d. h. das Geländersegment ist ausgefahren (Fig. 13) und die linke Feder ist zusammengedrückt. Schaltet jetzt die Steuerelektronik das Steuerventil 28 um, so daß nach der Verzögerung durch die Schaltzeit des Steuerventils 28 der andere Anschluß 62 mit Druckluft beaufschlagt und der eine Anschluß 61 entlastet wird, dann wird sich die Kolbenstange sofort nach links bewegen, da die Kraft der gespannten Feder 29, die gleich der Kolbenkraft ist, alleine schon ausreicht, um die Haftreibung des Kolbens zu überwinden und die Luft in der gegenüberliegenden Zylinderkammer über das Schnellentlüftungsventil 63 und das Steuerventil 28 auszutreiben. Zu der Federkraft kommt noch die Kraft des sich aufbauenden Luftdruckes, so daß der Kolben auf den ersten Millimeter der Hubstrecke mit einer Kraft beschleunigt wird, die erheblich über der eigentlichen Stoßkraft des Zylinders liegt. Nach Verlassen des Federbereichs wird der Kolben normal durch die Kraft des Luftdruckes beschleunigt bis die gegenüberliegende Feder erreicht wird, die jetzt als Endlagendämpfung fungiert und damit die zum Rückhub nötige Energie speichert.

Die Anbringung von Federn 29 hat neben der Verkürzung der Losbrechzeit noch einen weiteren Vorteil:

Bei zwei parallelen Zylindern 26 für ein einziges Segment, deren Kolbenstangen durch ein Joch 64 verbunden sind (Fig. 14), treten normalerweise infolge unterschiedlicher Los-brechzeiten Gleichlaufprobleme auf, die zur Verkantung der Kolben 25 und zur schnellen Zerstörung der Lagerungen der Kolbenstangen führen. Wird die Haftreibung jedoch durch Federn 29 überwunden, so sind die Losbrechzeiten der beiden durch das Joch 64 verbundenen Kolben im wesentlichen gleich, so daß keine Verkantung entsteht. Es bleiben nur Gleichlaufprobleme, die durch verschiedene Reibungskoeffizienten der beiden Zylinder verursacht werden. Diese auftretenden Kräfte sind leicht über das Joch 64 und den Bügel 20 abzufangen.

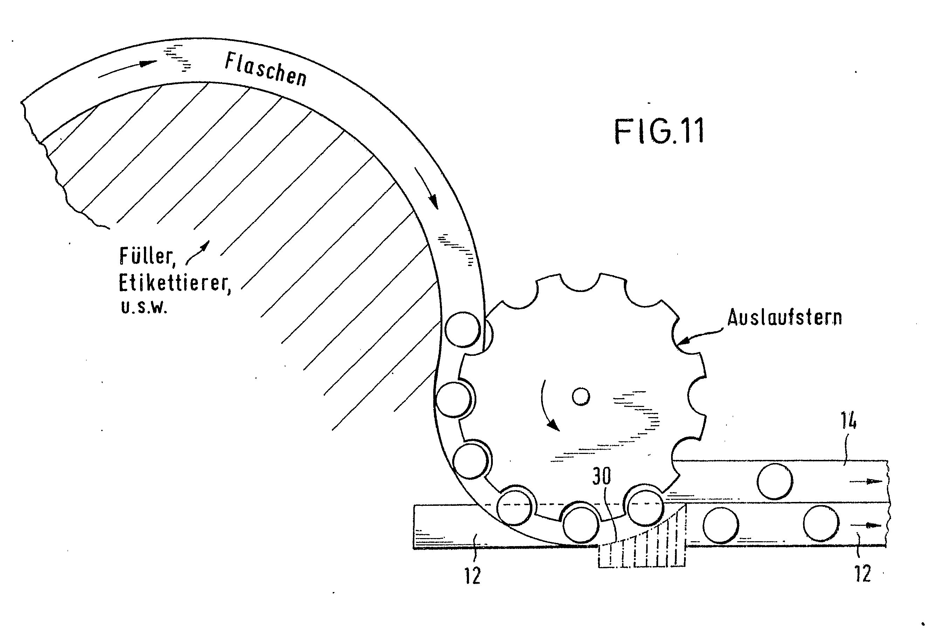

Bei Getränke-Abfüllanlagen mit zylindrischen Flaschen kann die erfindungsgemäße Ablenkvorrichtung auch in Verbindung mit dem Auslaufstern einer Fülleinrichtung, einer Etikettiermaschine usw. verwendet werden. Gemäß Fig. 11 werden die Ablenkeinrichtungen dabei so angeordnet, daß die Flaschen den Auslaufstern bei eingefahrenen bzw. ausgeschalteten Ablenkeinrichtungen auf der Transporteinrichtung 12 verlassen können, während die Flaschen bei ausgefahrenen bzw. eingeschalteten Ablenkeinrichtungen vom Auslaufstern bis zu einer zweiten Transporteinrichtung 14, einen Drehteller usw. mitgenommen werden.

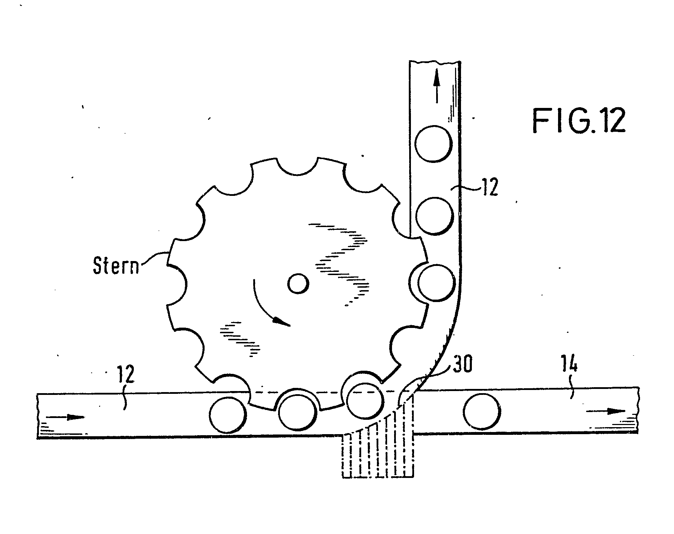

In Fig. 12 ist eine weitere mögliche Kombination der erfindungsgemäßen Ablenkvorrichtung mit einem Transportstern gezeigt. Diese Anordnung ist insbesondere unter Staudruck vorteilhaft. Der Hauptstrom der Gegenstände wird durch die Ablenkfläche 30 in der Richtung um 90° gedreht und auf eine Transporteinrichtung geschleust. Die durch einen Prüfer bestimmten, abzulenkenden Gegenstände laufen dagegen geradeaus weiter. Das oben beschriebene Steuerungsverfahren wird dazu umgekehrt. Durch die Änderung der Richtung des Hauptstromes der Gegenstände wird erreicht, daß z. B. der in einer Produktionslinie auftretende Rückstau ohne Einfluß auf die Vorrichtung bleibt und unter vollem Staudruck in der Produktionslinie aussortiert werden kann.

Eine weitere Anwendungsmöglichkeit der Vorrichtung ergibt sich, wenn man die Reibung zwischen Gegenstand und Segment durch einen Reibbelag erhöht, der an den Angriffsflächen der Segmente aufgebracht ist. Dadurch können die Gegenstände beim Ablenken in eine andere Stellung übergeführt werden. (Zylindrische Gegenstände z. B. rollen an der Ablenkebene ab — quaderförmige machen bei entsprechender Steuerung der Fließweiche eine oder mehrere Vierteldrehungen um ihre Achse.)

Beispiel 1

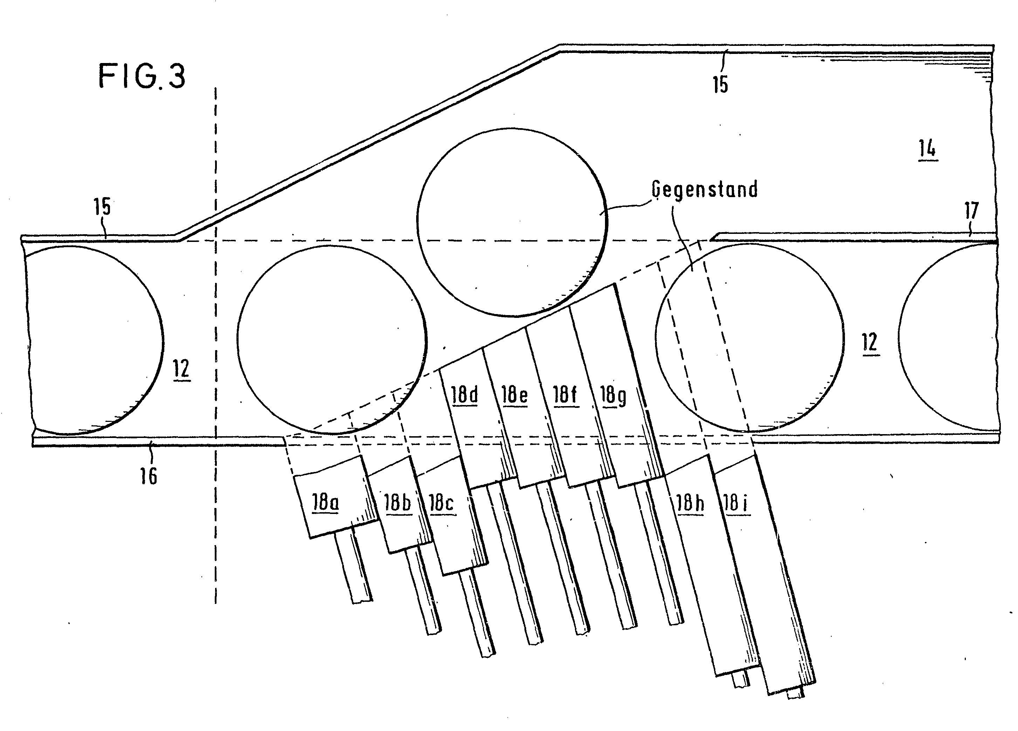

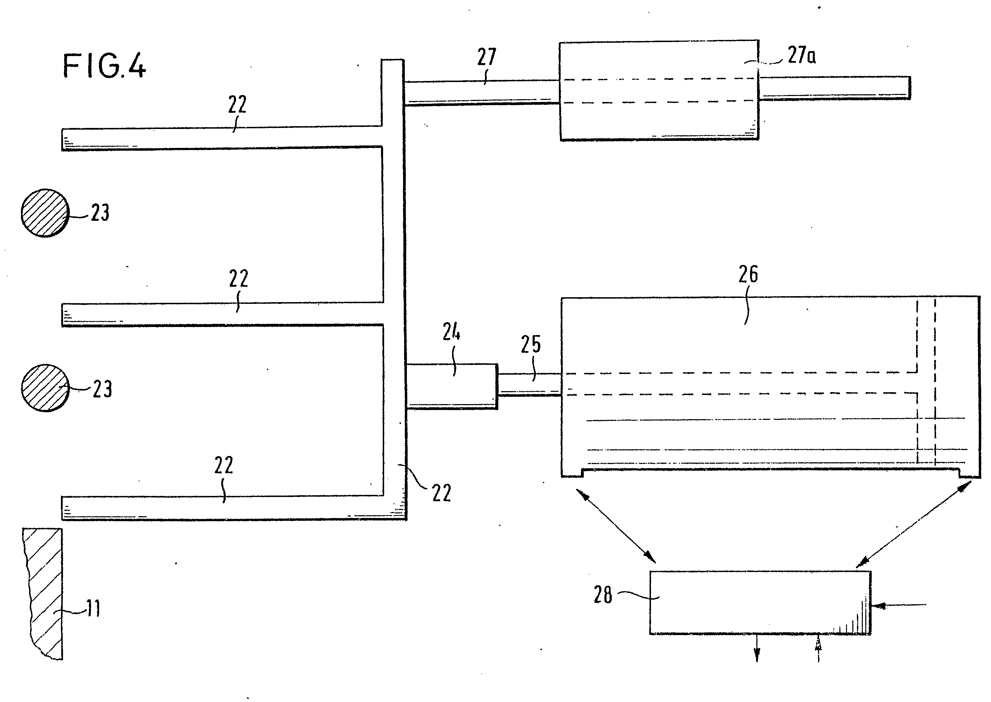

Nachfolgend wird anhand der Fig. 3 und 4 eine Getränke-Abfüllanlage beschrieben, die darauf eingerichtet ist, verschiedene zylindrische Flaschensorten (Durchmesser 50—90 mm) in wechselndem Betrieb abzufüllen, wobei die gefüllten Flaschen auf Verschluß und Füllstand kontrolliert werden und daraufhin eine Gut-Schlecht-Sortierung ausgeführt wird.

In der Ablenkstrecke läuft parallel zu der ersten Transporteinrichtung 12 in Form einer Stahlgliederkette, auf der die Produktionslinie verläuft, eine zweite Transporteinrichtung 14 im Abstand von etwa 5 bis 10 mm, die zum Abtransport der abgelenkten Flaschen dient. Das ortsfeste seitliche Geländer 15 der ersten Transporteinrichtung 12 biegt in der Ablenkstrecke parallel zur Ablenkebene ab und wird zum Außengeländer 15 der zweiten Transporteinrichtung 14.

Das zweite Geländer 16 der ersten Transporteinrichtung 12 besteht aus zwei übereinanderliegenden Leitstäben 23, die zur Anpassung an verschiedene Flaschendurchmesser nach innen und außen senkrecht zur Förderrichtung verschiebbar sind. Außerdem besitzen die beiden Transporteinrichtungen unmittelbar nach der Ablenkstrecke ein gemeinsames ortsfestes Geländer 17, durch das eine Vermischung nach der Ablenkung vermieden wird.

Die Ablenkvorrichtung selbst besteht aus 9 einzeln ausfahrbaren Segmenten 18, die dicht aneinandergereiht sind. Diese Segmente bestehen jeweils aus 3 Fingern 22, die derart an einem senkrechten Bügel 20 befestigt sind, daß einer gerade über die Stahlgliederkette, einer zwischen und einer über den beiden Leitstäben 23 ausgefahren werden kann. Die Länge der Finger 22 wird vom Ausfahrweg bestimmt; so ist zum Beispiel bei dieser Ausführung der kürzeste Finger (Segment 18a) etwa 30 mm und der längste Finger (Segment 18i) etwa 115 mm lang.

Die Finger 22 sind an ihrer Vorderseite derart abgeschrägt, daß sie im ausgefahrenen Zustand eine glatte Ablenkebene bilden, die etwa im Winkel von 30° zur Förderrichtung steht. Hierbei weist das erste Segment 18a eine leichte Krümmung auf, damit die Flaschen in einem glatten Übergang aus der Förderrichtung in die Ablenkrichtung geführt werden. Außerdem ist das erste Segment 18a mit einer Breite von ca. 28 mm etwas breiter als die übrigen 8 Segmente, die alle eine Breite von 20 mm haben. Die Ausfahrrichtung bildet bei dieser Ausführung mit der Fördereinrichtung einen Winkel von 105°.

An dem oben genannten Bügel 20 ist auf der den Fingern gegenüberliegenden Seite am oberen Ende eine Führungsstange 27 befestigt, die in Kunststoffbuchsen 27a geführt wird und so dem Segment die nötige Stabilisierung gibt. Etwa in der Mitte des Bügels greift die Kolbenstange des als Stellglieds benützten Pneumatikzylinders 26 ein. Der Zylinder 26 wird von einem elektrisch betätigten 5/2-Wege-Ventil als Steuerventil 28 gesteuert.

Alle Segmente und Stellglieder sind auf einer, zusammen mit den Geländerleitstäben verschiebbaren Grundplatte montiert.

Bei der Steuerung kommt das oben beschriebene Prinzip der Steuerung auf den Vorgänger und den Nachfolger des auszuleitenden Gegenstandes zur Anwendung. Die Prüflinie etwa 15 cm vor dem ersten Segment wird in dieser Ausführung durch eine Trigger-Lichtschranke dargestellt, die FF 0 abhängig von den beiden Prüfbedingungen Füllstand/Verschluß setzt bzw. nicht.

Zur Positionsbestimmung des Vorgängers und des Nachfolgers einer auszuleitenden Flasche wird eine 256 × 1 Element CCD-Kamera eingesetzt.

Durch eine geeignete Optik wird eine etwa 35 cm lange waagrechte Abtastlinie, die ca. 3 cm hinter der Prüflinie beginnt und in Halshöhe der jeweils zu sortierenden Flaschensorte liegt, auf den CCD-IC abgebildet. Eine Auswertlogik verfolgt dann die Position der einzelnen Flaschenhälse und leitet daraus unter Berücksichtigung des vorgegebenen Flaschendurchmessers die Freimeldungen und Einfahrimpulse ab, die von der in Figur 2 angegebenen Prinzipschaltung weiter verarbeitet werden.

Da bei kleineren Flaschendurchmessern zwecks besserer Flaschenführung das bewegliche Geländer 16 und damit die gesamte Ablenkvorrichtung zur zweiten Transporteinrichtung hin verschoben wird, dürfen nicht mehr alle Segmente ausgefahren werden, sondern nur diejenigen Segmente, deren Spitze die Grenze (ortsfestes Geländer 17) zu der zweiten Transporteinrichtung nicht überschreitet.

Während bei 90 mm Flaschendurchmesser alle 9 Segmente ausfahren, sind zum Beispiel bei 50 mm nur die ersten 5 Segmente ausgefahren. Die oben schon erwähnte Vor-Eingabe des Flaschendurchmessers bewirkt die hierzu nötigen Umschaltungen automatisch.

### Beispiel 2

Die hier beschriebene Ausführung ist für zylindrische Flaschen mit 56 mm Durchmesser geeignet und besitzt eine Leistung von bis zu 50 000 Flaschen pro Stunde (Bandgeschwindigkeit etwa 1,5 m/sec).

Im Unterschied zu dem obigen Beispiel 1 dürfen sich hier die nichtauszuleitenden Flaschen selbst nicht auf der ersten Transporteinrichtung bewegen (keine Drift).

Der Aufbau der Transporteinrichtungen ist gleich dem im Beispiel 1 mit der Ausnahme, daß das Geländer 16 in der Ablenkstrecke unterbrochen ist.

Die Ablenkeinrichtung besteht wiederum aus 9 einzeln ausfahrbaren Segmenten, die dicht aneinandergereiht sind. Die Segmente bestehen jeweils aus einem senkrechten, 100 mm hohen und etwa 20 mm breiten (das erste Segment besitzt eine Breite von 25 mm) Kunststoffbügel mit 4 Erhöhungen (Gleitnasen), an denen die Flaschen entlanggleiten.

Aus- und eingefahren werden die Segmente durch doppeltwirkende Zylinder (16 mm Kolbendurchmesser) mit durchgehender Kolbenstange; diese Zylinder werden über elektrisch betätigte 5/2 Wege-Ventile mit Schnellentlüftungen gesteuert.

Die Kolbenstangen tragen je zwei 30 mm lange Federn. Die Federkonstanten sind so bemessen, daß die Federn des ersten Segments (Ausfahrweg ≈6 mm) durch die Kolbenkraft etwa um 2 mm, die des zweiten Segments (Ausfahrweg 11 mm) etwa um 4 mm, die des dritten Segments (Ausfahrweg 17 mm) etwa 7 mm, die des vierten Segments (Ausfahrweg 24 mm) etwa 10 mm, die des fünften Segments (Ausfahrweg 32 mm) und der folgenden Segmente etwa um 12 mm zusammengedrückt werden.

Oberhalb der Zylinder ist jeweils eine Führungsstange an den Segmenten befestigt, die auf der anderen Seite durch ein Joch mit der Kolbenstange verbunden ist.

Die Zylinder sitzen in einem Trägerblock aus Kunststoff, der zugleich Gleitlager für die Führungsstangen ist.

Die Segmente bilden im ausgefahrenen Zustand eine parabelförmige Ablenkkurve mit einer Anfangssteigerung von $m=0,2$ und etwa 70 mm Ausfahrstrecke des letzten Segments. ($y = 9,64 \cdot 10^{-4} x^2 + 0,2x$; Masse in mm).

Bei der Steuerung kommt das oben beschriebene Prinzip der Steuerung auf den Vorgänger und den Nachfolger des auszuleitenden Gegenstandes, realisiert in einem Mikroprozessorprogramm, zur Anwendung.

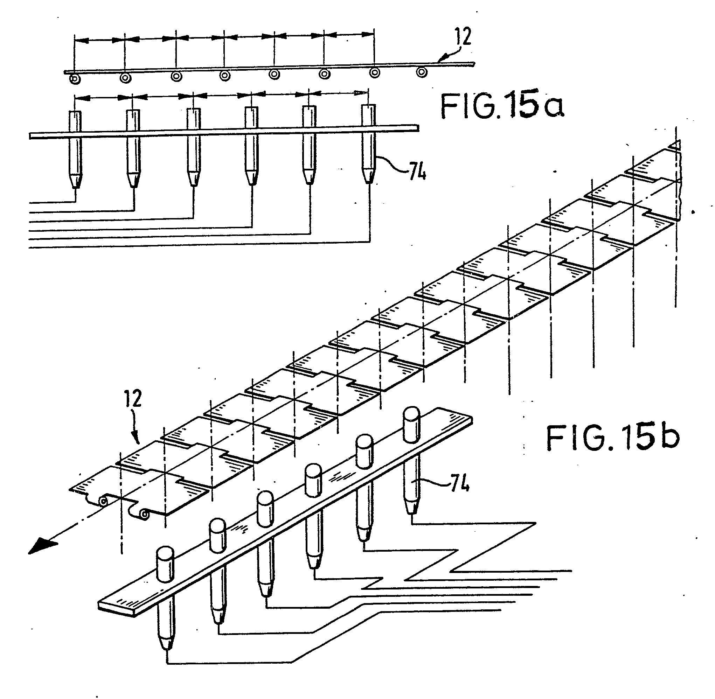

An einer Prüflinie 32 (Triggerlichtschranke) etwa 15 cm vor der ersten Ablenkeinrichtung wird festgestellt, ob die beiden Prüfbedingungen Füllstand und Verschluß erfüllt sind oder nicht. Bei Nichterfüllung »merkt sich« die mit einem Mikroprozessor arbeitende Luftdüsen-Steuereinrichtung die fehlerhafte Flasche, d. h. die Stelle auf der Transporteinrichtung (Gliederkette), wo dieselbe steht. Über einen Vielfach-Induktivabtaster 74 (Fig. 15) wird pro 6 mm Gliederkettenvorschub jeweils ein Taktsignal an die Steuerung abgegeben.

Dieser Vielfach-Induktivabtaster (Fig. 15) besteht aus 6 einzelnen induktiven Näherungsschaltern, die mit 44,3 mm Mittelabständen dicht unter der Gliederkette montiert sind. Die Scharniere der Gliederkette, die in 38,1 mm Mittelabständen über die Initiatoren hinweggleiten, erzeugen dann die gewünschten Taktimpulse. Durch Aufsummieren dieser Impulse »weiß« die Steuerung genau, wann die fehlerhafte Flasche sich vor Segment a, b, c usw. befindet.

Weiterhin wird aus den Taktimpulsen der Induktivabtaster die Transportgeschwindigkeit errechnet und die betreffenden Ventile werden je nach Transportgeschwindigkeit früher (schnell) oder später (langsam) angesteuert.

Anhand dieser Taktsignale und des Triggersignals der Prüfeinrichtung verfolgt die Mikroprozessorsteuerung den Lauf der nicht auszuleitenden Flaschen bzw. deren Position auf der Gliederkette. Da der Durchmesser der nicht auszuleitenden Flaschen bekannt ist (in diesem Fall 56 mm), kann die Steuerung bei Fehlermeldung von der Prüfeinrichtung immer die maximale mögliche Anzahl von Geländersegmenten zwischen zwei fehlerfreien Flaschen ausfahren.

Hierbei muß die Steuerung aber noch die Stellzeiten der einzelnen Segmente berücksichtigen, da die Transportgeschwindigkeit ständig variiert (0 bis 1,5 m/sec.). Entsprechend der jeweiligen Transportgeschwindigkeit, die automatisch aus dem zeitlichen Abstand der Taktimpulse errechnet wird, wird für jeden einzelnen Zylinder von dem Mikroprozessor die notwendige Vorverlegung seiner Ansteuerpunkte (Einfahren-Ausfahren) immer wieder berechnet und bei der Ansteuerung berücksichtigt.

**Patentansprüche**

1. Vorrichtung zum seitlichen Ablenken von bestimmten, nach einem Merkmal ausgewählten Gegenständen von einer ersten, durch ein Transportband gebildeten Transporteinrichtung (12) auf eine zweite Transporteinrichtung (14) der abgelenkten Gegenstände,

— mit einer oder mehreren Erfassungseinrichtungen (Lichtschranken 34, 35) am Eingang der Vorrichtung, die beim Durchgang der Gegenstände Steuerimpulse erzeugen, und

— mit einer Ablenkeinrichtung, die eine kontinuierliche, unter einem Winkel zur ersten Transporteinrichtung (12) liegende Ablenkfläche (21) zum Ablenken der abzulenkenden Gegenstände aufweist, ortsfest, d. h. nicht mit dem Transportband mitlaufend, angeordnet ist und etwa senkrecht zur ersten Transporteinrichtung (12) und in deren Ebene aus- und einfahrbar ist, wobei das Aus- und das Einfahren unter Ansprechen auf die Steuersignale erfolgt,

dadurch gekennzeichnet,

— daß die Ablenkeinrichtung in eine Mehrzahl von Ablenksegmenten (18n; 58n) unterteilt ist, die zusammen die kontinuierliche Ablenkfläche bilden, und die einzeln ausfahrbar sind und

— daß die Steuerimpulse entsprechend der Bahngeschwindigkeit, dem Abstand der Erfassungseinrichtungen (Lichtschranken 34, 35) von den einzelnen Ablenksegmenten (18n; 58n) und der Ansprechzeit und der Aus- und der Einfahrzeit der Ablenksegmente (18n; 58n) zeitlich derart verzögert werden, daß zu jedem Zeitpunkt nur diejenigen Ablenksegmente (18n; 58n) ausgefahren sind bzw. werden, die zu diesem Zeitpunkt oder unmittelbar danach zum Ablenken eines Gegenstandes benötigt werden und daß die einzelnen Ablenksegmente zu dem Zeitpunkt, zu dem ein abzulenkender Gegenstand auf sie trifft, nicht mehr in Bewegung sind.

2. Vorrichtung nach Anspruch 1, dadurch gekennzeichnet,

— daß das Förderband ein Gliederband ist.

3. Vorrichtung nach Anspruch 1 oder 2, dadurch gekennzeichnet,

— daß die Breite der Angriffsflächen (21) kleiner ist als etwa die Hälfte der aus der Abmessung der Gegenstände in Förderrichtung und deren Abstand gebildeten Summe.

4. Vorrichtung nach einem der Ansprüche 1 bis 3, dadurch gekennzeichnet,

— daß die Ablenkeinrichtung (18n; 58n) aus mehreren waagrechten, an einem senkrechten Bügel (20) befestigten Fingern (22) bestehen, wobei die Länge der Finger größer als der Ausfahrweg der Ablenkeinrichtungen ist.

5. Vorrichtung nach einem der Ansprüche 1 bis 4, dadurch gekennzeichnet,

— daß das Ausfahren der Ablenkeinrichtungen (18n; 58n) eine Translationsbewegung oder eine Rotationsbewegung darstellt.

6. Vorrichtung nach einem der Ansprüche 1 bis 5, dadurch gekennzeichnet,

— daß die Ablenkeinrichtungen (18n; 58n) durch doppeltwirkende Zylinder (26) ein- und ausgefahren werden und der Kolben (25) durch das Druckfluid gegen die Kraft von Federn (29) in den Endpositionen gehalten wird und beim Ein- bzw. Ausfahren durch die Federn (29) zusätzlich beschleunigt wird.

7. Vorrichtung nach einem der Ansprüche 1 bis 6, dadurch gekennzeichnet,

— daß die zeitliche Verzögerung der Steuerimpulse derart ist, daß das erste Ablenksegment (18a; 58a) ausgefahren wird bzw. bleibt, wenn der dem abzulenkenden Gegenstand vorausgehende Gegenstand das erste Ablenksegment (18a; 58a) passiert hat, und die folgenden Ablenksegmente ausgefahren werden bzw. bleiben, wenn das vorausgehende Ablenksegment ausgefahren ist und der dem abzulenkenden Gegenstand vorausgehende Gegenstand das betreffende Ablenksegment passiert hat und daß das erste Ablenksegment (18a; 58a) eingefahren wird bzw. bleibt, wenn der einem Gegenstand nachfolgende Gegenstand nicht abzulenken ist und das erste Ablenksegment (18a; 58a) erreicht und die folgenden Ablenksegmenten jeweils eingefahren werden, wenn das vorausgehende Ablenksegment eingefahren ist und der nachfolgende Gegenstand das betreffende Ablenksegment erreicht.

8. Vorrichtung nach einem der Ansprüche 1 bis 7, dadurch gekennzeichnet,

— daß die zweite Transporteinrichtung ein Sternrad ist.

**Claims**

1. Apparatus for laterally deflecting specific objects selected by a feature from a first conveying means (12) formed by a belt conveyer to a second means (14) for conveying the deflected objects,

— comprising one or more detectors (light barriers 34, 35) at the entrance of the apparatus, generating control pulses as the object pass therethrough, and
— a deflecting means having a continuous deflecting surface (21) for deflecting the objects to be beflected, which defines an angle with the first conveying means (12), is fixed, i. e. does not travel with the conveyer belt, as well as adapted to be extended and retracted approximately perpendicularly to the first conveying means (12) and in the plane thereof, extension and retraction taking place in response to the control pulses,

characterized

— in that the deflecting means is sub-divided into a plurality of deflecting segments (18n; 58n) which together form the continuous deflecting surface and can bei extended individually, and
— in that the control pulses are time-delayed according to the path velocity, the spacing of the detectors (light barriers 34, 35) from the individual deflecting segments (18n; 58n) and the response time as well as the extension and retraction time of the deflecting segments (18n; 58n) in a way such that at any point of time only those deflecting segments (18n; 58n) have been or are extended, respectively, which are required at this point of time or immediately thereafter for deflecting an object, and that the individual deflecting segments no longer are moving at the point of time at which they are contacted by an object to be deflected.

2. The apparatus as claimed in claim 1, characterized in that the belt conveyer is a link conveyer.

3. The apparatus as claimed in claim 1 or 2, characterized

— in that the width of the contact surfaces (21) is less than about one half of the sum formed by the dimension of the objects in the conveying direction and their spacing.

4. The apparatus as claimed in anyone of claims 1 to 3, characterized

— in that the deflecting means (18n; 58n) is composed of a plurality of horizontal fingers (22) fastened to a vertical bracket (20), the length of said fingers being greater than the extension path of the deflecting means.

5. The apparatus as claimed in anyone of claims 1 to 4, characterized

— in that the extension of the deflecting means (18n; 58n) constitutes a translational or a rotational motion.

6. The apparatus according to anyone of claims 1 to 5, characterized

— in that the deflecting means (18n; 58n) are retracted and extended by means of double-acting cylinders (26) and the piston (25) is held in the extreme positions by the pressure fluid against the force of springs (29) and during retraction or extension, respectively, is additionally accelerated by the springs (29).

7. The apparatus as claimed in anyone of claims 1 to 6, characterized

— in that the time delay of the control pulses is such that the first deflecting segment (18a; 58a) is or, respectively, remains extended when the obkect preceding the object to be deflected has passed the first deflecting segment (18a; 58a), and the successive deflecting segments are or, respectively, remain extended when the preceding deflecting segment has been extended and the object preceding the object to be deflected has passed the respective deflecting segment, and that the first deflecting segment (18a; 58a) is or, respectively, remains tetracted when the object succeeding an object is not to be deflected and reaches the first deflecting segment (18a; 58a), and the succissive deflecting segments are retracted each when the preceding deflecting segment has been retracted and the succeeding object reaches the respective deflecting segment.

8. The apparatus as claimed in anyone of claims 1 to 7, characterized

— in that the second conveying means is a star wheel.

## Revendications

1. Dispositif de déviation latérale de certains objets, sélectionnés d'après une particularité, pour faire passer, d'un premier système de transport (12) constitué par une bande transporteuse, à un second système de transport (14), les objets déviés, ce dispositif comportant à son entrée un ou plusieurs systèmes de détection (barrages lumineux 34, 35) qui émettent des impulsions de commande au passage des objets; et un système de déviation qui présente une surface de déviation continue (21), sous un angle par rapport au premier système transporteur, pour dévier les objets à mettre à part; ce système de déviation étant fixe, c'est-à-dire indépendant du mouvement de la bande transporteuse; ce système de déviation pouvant être déplacé dans un sens transversal au premier système transporteur (12), pour être mis en saillie et rétracté sous l'effet des signaux de commande; le dispositif étant caractérisé en ce que le système de déviation se compose d'un certain nombre de segments de déviation (18n; 58n), dont l'ensemble constitue la surface de déviation continue, chacun de ces segments pouvant être séparément mis en saillie; et en ce que les impulsions de commande sont retardées, en fonction de la vitesse de la bande transporteuse, et de la distance des systèmes de détection (barrages lumineux 34, 35) par rapport à chacun des segments de déviation (18n; 58n), ainsi qu'en fonction du délai de réaction et du délai de manoeuvre de mise en saillie et de rétraction des segments de déviation, de manière à n'avoir en saillie ou à ne mettre en saillie à chaque instant que ceux des segments de déviation (18n; 58n) qui sont nécessaires au même instant, ou immédiatement après, pour assurer la déviation d'un objet, et de manière à assurer l'immobilité de chacun des segments de déviation, au moment où un objet à dévier arrive à leur contact.

2. Dispositif conforme à la revendication 1, caractérisé en ce que la bande transporteuse est une bande formée d'éléments articulés.

3. Dispositif conforme à l'une des revendications 1 ou 2, caractérisé en ce que la largeur des faces d'appui (21) est inférieure à environ la moitié de la somme de l'encombrement des objets dans le sens du transport et de l'intervalle entre ces objets.

4. Dispositif conforme à l'une des revendications 1 à 3, caractérisé en ce que le système de déviation (18n; 58n) comporte plusieurs doigts horizontaux (22) fixés à un étrier vertical (20), la longueur de ces doigts étant supérieure à la course de mise en saillie du système de déviation.

5. Dispositif conforme à l'une des revendications 1 à 4, caractérisé en ce que la mise en saillie des systèmes de déviation (18n; 58n) s'effectue suivant un mouvement de translation ou de rotation.

6. Dispositif conforme à l'une des revendications 1 à 5, caractérisé en ce que la mise en saillie et la rétraction des systèmes de déviation (18n; 58n) sont assurés par des vérins (26) à double effet; le piston (25) de chaque vérin se trouvant maintenu dans chaque position extrême pat la pression du fluide qui s'oppose à l'effort d'un ressort de rappel (29); ce ressort communiquant une accélération supplémentaire au piston du vérin pour le mouvement de rétraction et de mise en saillie.

7. Dispositif conforme à l'une des revendications 1 à 6, caractérisé en ce que le retard appliqué aux impulsions de commande est tel que le premier segment de déviation (18a; 58a) vient en position de saillie ou reste dans cette position lorsque l'objet qui précède l'objet à dévier est passé en regard du premier segment de déviation (18a; 58a); et tel que les segments de déviation suivants viennent en position de saillie ou restent dans cette position lorsque le segment précédent est venue en position de saillie, et que l'objet qui précède l'objet à dévier est passé en regard du segment considéré; le premier segment de déviation (18a; 58a) venant en position de rétraction ou restant dans cette position lorsqu'il n'y a pas lieu de dévier l'objet suivant qui arrive en regard du premier segment de déviation (18a; 58a) chacun des segments de déviation suivant venant en position de rétraction lorsque le segment de déviation précèdent est venu en position de rétraction et que l'objet suivant arrive en regard du segment de déviation considéré.

8. Dispositif conforme à l'une des revendications 1 à 7, caractérisé en ce que le second système transporteue est constitué par un manège.

FIG.1

FIG. 2

FIG.3

Gegenstand

15 · 14 · 17 · 15 · 12 · 12 · 16 · 19

18a · 18b · 18c · 18d · 18e · 18f · 18g · 18h · 18i

0 003 111

FIG.4

# FIG.5

**FIG.6**

FIG.7

36

34 , 35

12

FIG.8

# FIG.9

FIG.10

51

57 b

57a

58h
58g

Geländer

58f

58e

58d

Gegenstand
(Dose)

56

58c

58b

58a

Geländer

Geländer

53

52

Transporteinrichtung

FIG.11

Flaschen

Füller,
Etikettierer,
u.s.w.

Auslaufstern

30

14

12

12

FIG.12

Stern

12

12

30

14

FIG.13

FIG.14

FIG.15a

FIG.15b